# EUROPÄISCHE PATENTSCHRIFT

(11) **EP 0 518 020 B1**
(45) Veröffentlichungstag und Bekanntmachung des Hinweises auf die Patenterteilung: **14.02.1996**
(21) Anmeldenummer: 92106195.8
(22) Anmeldetag: 10.04.1992
(51) Int. Cl.: C08G 18/67, C08G 18/08, C08G 18/66, C08G 18/75, C09D 175/04

(54) **Verfahren zur Herstellung wässriger, strahlenhärtender anionischer, Urethanharnstoffacrylatdispersionen**
Process for the production of aqueous, radiation curable anionic urethane urea acrylate dispersions
Procédé pour la préparation de dispersions aqueuses d'uréthane urée acrylate anionique photodurcissables

(30) Priorität: 12.06.1991 DE 4119331
(43) Veröffentlichungstag der Anmeldung: 16.12.1992
(73) Patentinhaber: HÜLS AKTIENGESELLSCHAFT, D-45764 Marl (DE)
(72) Erfinder: Flakus, Werner, Dr., W-4350 Recklinghausen (DE)

(56) Entgegenhaltungen:
- EP-A- 0 167 188
- EP-A- 0 209 684
- EP-A- 0 399 160

## Beschreibung

Die Erfindung betrifft die Herstellung wäßriger, strahlenhärtender, anionischer Urethanharnstoffacrylate durch Schmelzdispergierung präpolymerer Umsetzungsprodukte cyclischer Polyisocyanate mit Hydroxyethylacrylat, einschlägigen Polyolen und Natrium-aminocapronat in Wasser, frei von organischen Hilfslösemitteln.

In der Praxis überwiegen Herstellungsverfahren in Gegenwart von Lösemitteln, insbesondere Aceton. Sie ergeben ein gutes Leistungsbild, die Aufarbeitung ist aber aufwendig und zeitraubend.

In der DE-OS 39 16 340 wird die lösemittelfreie Herstellung wäßriger, strahlenhärtbarer Urethanacrylatdispersionen durch Umsetzung cyclischer Polyisocyanate, mit Hydroxyethylacrylat, COOH-haltigen Esterpolyolen und wäßrigen Basen beschrieben.

Das Leistungsbild der nach physikalischer Trocknung und Strahlenhärtung resultierenden Filme und Beschichtungen ist von hohem Niveau.

Unzulänglichkeiten zeigten sich aber hinsichtlich der physikalischen Trocknung der wäßrigen Filme vor der Strahlenhärtung. So verbleiben insbesondere bei der produktionsmäßig bedingt raschen IR-Trocknung Wasseranteile in den Filmen und Beschichtungen und verursachen eine merkliche Opazität nach Strahlenhärtung. Eine Verminderung oder Eliminierung dieser Restwasseranteile der noch ungehärteten Urethanacrylatharze ist z. B. durch Harnstoffanteile im Harzsystem zu erreichen. In der DE-OS 39 16 340 ist dargelegt, daß es bislang nicht gelang, in lösemittelfreien Schmelzen bei 80 - 100 °C, Amine und Isocyanate störungsfrei umzusetzen, die Reaktion ist außerordentlich heftig, sie führt zu diversen Nebenprodukten, zur Gelbildung, gegebenenfalls zur Gelierung, Verschäumung oder Polymerisation des Ansatzes.

Es war daher Aufgabe der Erfindung hochviskose, lösemittelfreie, noch NCO-haltige Urethanacrylatschmelzen mit Aminderivaten in NCO-freie Urethanharnstoffacrylate ionogenen Charakters störungsfrei umzusetzen und mit Wasser in Dispersionen zu überführen.

Überraschend gelang die lösemittelfreie Herstellung von Urethanharnstoffacrylaten dadurch, daß in die 80 - 95 °C heiße NCO-haltige Urethanacrylat-Schmelze bei intensiver Rührung und Durchmischung innerhalb von Sekunden eine wäßrige Lösung des Natriumsalzes der Aminocapronsäure bestimmter Konzentration eingespeist wird. Das dabei anfallende hochviskose, NCO-freie ionogene Präpolymere wird innerhalb von Sekunden mit heißem, entionisiertem Wasser verdünnt und aus dem Bereich Wasser-in-Öl-Emulsion in den Bereich Öl-in-Vasser-Emulsion überführt. Die heiße mit 50 - 45 Massen-% Feststoff anfallende Emalsion wird schließlich kalt gerührt, filtriert und abgefüllt.

Gegenstand der Erfindung ist daher ein Verfahren zur Herstellung wäßriger, strahlenhärtender, anionischer Urethanharnstoffacrylatdispersionen, dadurch gekennzeichnet, daß cyclische Polyisocyanate zunächst mit Hydroxyethylacrylat bei 25 - 50 °C im NCO/OH Äquivalentverhältnis 4 : 1 bis 5 : 1 unter Bildung von NCO-haltigen Urethanacrylaten und anschließend mit Polyolen bei 50 - 100 °C unter Bildung von NCO-haltigen Urethanacrylaten in Abwesenheit von Lösemitteln umgesetzt werden und in die heiße Schmelze bei 80 bis 95 °C bei intensiver Durchmischung und innerhalb von Sekunden eine verdünnte wäßrige Lösung eines Alkalisalzes der Aminocapronsäure einer Konzentration von 35 - 20 Massen-% eingespeist und mit weiterem Wasser emulgiert wird.

Der erfindungsgemäße Einsatz von ausschließlich aminocapronsaurem Natrium als tensidwirksamen, NCO reaktiven und harnstoffbildenden Reaktanten führt nach dem chemischen Einbau zu einer überragenden Lagerstabilität dieser Verbindung der wäßrigen Urethan-Systeme. Mit höheren oder niederen homologen Aminocarbonsäuren oder Aminosulfonsäuren bzw. deren Salze sind zwar ähnliche Dispersionen aber nur mit limitierter Lagerstabilität zu erzielen.

Es bleibt zu vermuten, daß aminocapronsaure Alkalisalze eine optimale Kettenlänge, Verträglichkeit und Basizität der Salze realisieren.

Aminocapronsaure Alkalisalze sind durch Verseifung von Caprolactam mit wäßrigem Alkali wie NaOH, KOH in einfachster Weise zugänglich.

Der erfindungsgemäße Einsatz einer wäßrigen Natrium-Aminocapronatlösung von 35 - 20 Massen-% resultiert wohl aus dem Wasserbedarf zur Kühlung der heftigen NCO/NH₂-Reaktion, dem Zeitbedarf der Eingabe des Tensids und der Viskositätslage des resultierenden ionischen Wasser-in-Öl Präpolymer-Systems sowie der Vermeidung von Nebenreaktionen.

Bei höher konzentrierter Tensidlösung wird die Reaktion zu heftig, bei stark verdünnter Tensidzugabe kommt es zu beträchtlicher CO₂-Entwicklung durch NCO/H₂O-Harnstoff-Bildung.

Durch die nachfolgende rasche Zugabe von heißem, entionisiertem Wasser von 60 - 80 °C werden Gelbildung in der Dispersion und Trockenfilmausbildungen an der Reaktorwandung unterlaufen, jeweils bei intensiver Rührung und Durchmischung des Reaktionsguts.

Zur Praxis der wäßrigen Urethandispersionen:
1. Es dominieren noch heute acetonische Verfahren zu deren Herstellung.
2. Viele wäßrige Zubereitungen enthalten darüber hinaus z. T. beträchtliche Anteile organischer Lösemittel zur Regulierung der Filmbildungstemperatur und der Lagerstabilität.
3. Wegen unbefriedigender Lagerstabilität wäßriger Zubereitungen werden auch Systeme als in Wasser dispergierbar, aber jedenfalls nicht als in Wasser dispergiert deklariert.

Das erfindungsgemäß beanspruchte Verfahren führt zu lagerstabilen, ausschließlich wäßrigen, strahlenhärtbaren Dispersionen, frei von organischen Lösemitteln und übertrifft den Stand der Technik in folgenden Positionen:
1. Keine Verwendung von organischen Lösemitteln zur Herstellung der wäßrigen Zubereitung (Einsparung von Lösemitteln, Energie und Verfahrenszeit).
2. Keine Verwendung organischer Lösemittel zur Regulierung der Filmbildungstemperatur oder der Lagerstabilität.
3. Ausschließlich in Wasser dispergierte ionische Urethanharnstoffacrylate von überragender Lagerstabilität. (Viele Monate stabil bei 60 °C Dunkel lagerung).
4. Die Harnstoffanteile gewährleisten eine rasche, störungsfreie IR-Trocknung unter Ausbildung transparenter Filme und Beschichtungen, sie katalysieren die UV-Härtung und verbessern nachhaltig die Haftung der Filme auf diversen Substraten.
5. Die erfindungsgemäß hergestellten wäßrigen Dispersionen haben eine Teilchengröße im Bereich von 50 - 80 nm, die üblicherweise nur durch Dispergierung ausgehend von z. B. acetonischen Lösungen analoger Präpolymerer erzielbar sind.
6. Während Analogdispersionen, hergestellt aus acetonischer Verdünnung und Dispergierung in Wasser bei der Applikation durch partielle physikalische Antrocknung eine Verklebung und erhebliche Reinigungsprobleme von Arbeitsmitteln und Gerätschaften verursachen, weisen die erfindungsgemäß hergestellten Dispersionen diesen Nachteil überraschenderweise nicht auf, sie ermöglichen eine problemlose Reinigung von Reaktoren und Verarbeitungseinrichtungen.

Das Leistungsbild der gehärteten Filme und Beschichtungen der erfindungsgemäß hergestellten Dispersionen ist sehr gut wie in den Beispielen dargelegt wird.

Erfindungsgemäß werden ausgehend von cyclischen Polyisocyanaten wie 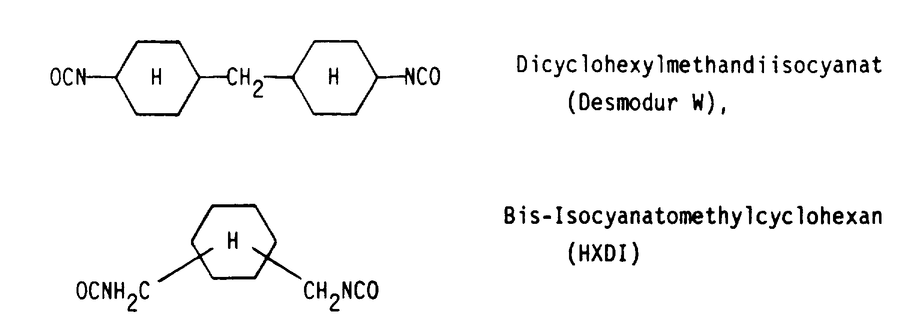 und vorzugsweise 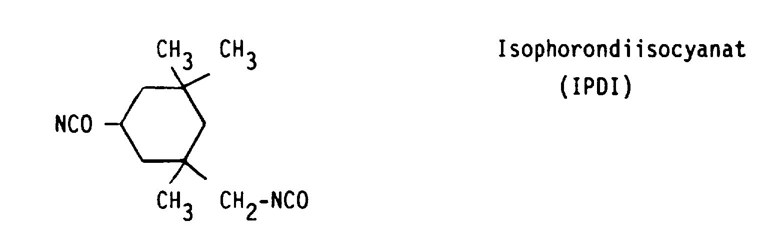 diese im allgemeinen in an sich bekannter Weise zunächst mit Hydroxyethylacrylat partiell acryliert, wobei die Umsetzung von NCO und OH-Äquivalenten im Verhältnis von 4 : 1 bis 5 : 1 vollzogen wird, mit 0,01 Massen-% Dibutylzinndilaurat (DBTL) bei 25 - 35 °C katalytischer und thermischer Aktivierung. Die Acrylierung in der 1. Reaktionsstufe ist weniger verfahrensmäßig erforderlich als mehr im Hinblick auf die Ausbildung eines absolut geruchlosen Endproduktes und erfolgt aus ökologisch/toxikologischen Aspekten, um eine quantitative Umsetzung des toxischen Hydroxyethylacrylats bei hoher NCO-Konzentration zu gewährleisten. Nachfolgend erfolgt die Umsetzung der partiell acrylierten Isocyanate mit Trimethylolpropan und Polyetherdiolen oder Diolen zu noch NCO-haltigen Präpolymeren durch katalytische Aktivierung mit 0,03 DBTL im Bereich von 35 - 95 °C nach Maßgabe von Umsetzung und Viskosität des Reaktionsguts bis zum angestrebten NCO-Endgehalt, was in 2 - 3 Stunden erzielt wird. Man kann aber auch umgekehrt verfahren.

Als Polyetherdiole kommen vorzugsweise Polymerisate des Tetrahydrofurans, sog. Terathane^{R} der Fa. Du Pont zur Anwendung.

Je nach Molekulargewicht des Präpolymeren kommen NCO/NH-Äquivalente im Verhältnis von 8 : 1 bis 10 : 1 für die Harnstoffbildung und die Ausbildung von COO Na-Äquivalenten zur Umsetzung.

### Beispiel 1: Urethanharnstoffacrylatdispersion (lösemittelfreie Arbeitsweise)

- Basis: Isophorondiisocyanat-Polyether/Polyol
- Tensid: Wäßrige Lösung von aminocapronsaurem Natrium

In einer Vorlage von 1 110 g Isophorondiisocyanat (5 Mol), 0,14 g Dibutylzinndilaurat (DBTL), 1,4 g 2.6-Di-tert.-butyl-4-methylphenol (Ionol^{R} CP der Firma Shell), 22,3 g Tinuvin^{R} 292 der Firma Ciba Geigy (Sebacinsäureester von Triacetonamin-Alkoholen), 8,4 g Tinuvin^{R} 900 der Firma Ciba Geigy (Benztriazol-Verbindungen), 5,5 g Irganox^{R} 1010 der Firma Ciba Geigy (3,5-Di-tert.-butyl-4-hydroxyphenyl)propionsäureester des Pentaerythrits) werden unter Rühren innerhalb von 15 Minuten 235,7 g 2-Hydroxyethylacrylat (2 Mol) OHZ 476 mgKOH/g zugetropft. Reaktionstemperatur 25 - 35 °C. Nachreaktionszeit 30 Minuten.

Anschließend werden in den Reaktor innerhalb von einer Stunde unter Rühren zugepumpt: eine homogene Schmelze von 1 312,3 g Polytetrahydrofuranetherdiol (2 Mol, MG ca. 650, OHZ 171 mgKOH/g, Terathane^{R} 650 der Fa. Du Pont), 134 g Trimethylolpropan (1 Mol) sowie 0,71 g Dibutylzinndilaurat (DBTL).

Reaktionstemperatur 35 - 50 °C (beim Eintragen der Polyole) nachfolgend 60 - 80 - 90 °C bis zur vollständigen Umsetzung der Polyole zum NCO-Gehalt von 1,48 %.

In das NCO-gerechte Präpolymer von 90 °C werden innerhalb von ca. 30 Sekunden bei intensiver Rührung 612 g einer wäßrigen Lösung von aminocapronsaurem Natrium (25 Massen-%) eingetragen.

Nun werden innerhalb von ca. 100 Sekunden 1 500 g 60 - 70 °C heißes, entionisiertes Wasser eingetragen, die W/O-Dispersion homogenisiert und mit 1 250 g kaltem entionisierten H₂O in eine ca. 48%ige Dispersion überführt. Die Verfahrenszeit beträgt ca. 3 Stunden. Die Viskosität der Dispersion: DIN-Becher Nr. 4: 26 Sekunden.

Stahlblech- und Foliendaten nach Härtung der Dispersion mit 200 Watt/inch in 5 Sekunden unter Zusatz von 2 Gew.-% Darocur^{R} 1116 der Firma Merck (Fotoinitiator).

| | | |
|---|---|---|
| Pendelhärte nach König gemäß DIN 53 157 | (sec) | 46 |
| Erichsentiefung | (mm) | > 10,0 |
| Schichtdicke | (µm) | 145 |
| Reißfestigkeit gemäß DIN 53 455 | N/mm | 23,3 ± 4,7 |
| Bruchdehnung | (%) | 120 ± 20 |
| Lösemittelresistenz | (rubs) | |
| Reibtest mit 1 kg/cm | | |
| Belastung | | |
| Aceton | | > 100 (kein Angriff) |

### Beispiel 2: (lösemittelfreie Fahrweise gem. Beispiel 1)

- Basis: Isophorondiisocyanat-Polyether/Polyole
- Tensid: Wäßrige Lösung von aminocapronsaurem Natrium

In Analogie zu Beispiel 1 werden ausgehend von 999 g Isophorondiisocyanat (4,5 Mol), 0,13 g DBTL, 1,2 g Ionol CP, 19,2 g Tinuvin 292, 7,1 g Tinuvin 900, 4,7 g Irganox 1010, 235,7 g 2-Hydroxyethylacrylat (2 Mol), 984,2 g Polytetrahydrofuranetherdiol (1,5 Mol MG ca. 650), 134 g Trimethylolpropan (1 Mol) und 0,59 g DBTL zur Umsetzung gebracht. In das NCO-gerechte Präpolymer von 1,76 Massen-% NCO werden 651 g wäßrige aminocapronsaure Natriumlösung (23,5 Massen-%) eingetragen, ferner 1 300 g 60 - 70 °C heißes, entionisiertes Wasser, anschließend 1 065 g kaltes entionisiertes H₂O (25 °C) unter Ausbildung einer Dispersion von ca. 47 Massen-% Feststoff.
Die Herstellungszeit beträgt ca. 4 Stunden. Die Viskosität der Dispersion: DIN 4-Becher Nr. 4: 28 Sekunden.

Stahlblech- und Foliendaten nach Härtung der Dispersion mit 200 Watt/inch in 5 Sekunden unter Zusatz von 2 Gew.-% Darocur 1116 Handelsprodukt der Fa. E. Merck, Darmstadt.

| | | |
|---|---|---|
| Pendelhärte nach König gemäß DIN 53 157 | (sec) | 85 |
| Erichsentiefung | (mm) | > 10,0 |
| Schichtdicke | (µm) | 160 |
| Reißfestigkeit gemäß DIN 53 455 | N/mm | 21,2 ± 2,4 |
| Reißdehnung | (%) | 90 ± 15 |
| Lösemittelresistenz | (rubs) | |
| Reibtest mit 1 kg/cm | | |
| Belastung | | |
| Aceton | | > 100 (kein Angriff) |

### Beispiel 3: (lösemittelfreie Fahrweise gem. Beispiel 1)

- Basis: Isophorondiisocyanat-Polyether/Polyole
- Tensid: Wäßrige Lösung von aminocapronsaurem Natrium

In Analogie zu Beispiel 1 werden 888 g ausgehend von Isophorondiisocyanat (4 Mol), 0,11 g DBTL, 0,91 g 2,6 Ionol CP, 14,5 g Tinuvin 292, 5,4 g Tinuvin 900, 3,6 g Irganox 1010, 235,7 g 2-Hydroxyethylacrylat (2 Mol), 524,9 g Polytetrahydrofuranetherdiol (0,8 Mol, MG ca. 650), 134 g Trimethylolpropan (1 Mol), 23,6 g Hexandiol-1.6 (0,2 Mol) und 0,43 g Dibutylzinndilaurat (DBTL) zur Umsetzung gebracht bis zu einem NCO-Gehalt von 2,29 Massen-%. In das NCO-gerechte Präpolymer von 90 °C werden bei intensiver Rührung eine wäßrige Lösung von 680,0 g aminocapronsaures Natrium (22,5 Massen-%), ferner 1 100 g 60 - 70 °C heißes, entioniertes Wasser und schließlich mit 618 g entionisierten H₂O (25 °C) unter Ausbildung einer Dispersion von ca. 47 Massen-% Feststoff eingetragen.
Die Herstellungszeit beträgt ca. 4 Stunden. Die Viskosität der Dispersion: DIN-Becher Nr. 4: 30 Sekunden.

Stahlblech- und Foliendaten nach Härtung der Dispersion mit 200 Watt/inch in 5 Sekunden unter Zusatz von 2 Gew.-% Darocur 1116 Handelsprodukt der Fa. E. Merck, Darmstadt.

| | | |
|---|---|---|
| Pendelhärte nach König gemäß DIN 53 157 | (sec) | 167 |
| Erichsentiefung | (mm) | 8,5 |
| Schichtdicke | (µm) | 80 |
| Reißfestigkeit gemäß DIN 53 455 | N/mm | 38,4 ± 2,0 |
| Reißdehnung | (%) | 10 ± 1 |
| Lösemittelresistenz | (rubs) | |
| Reibtest mit 1 kg/cm | | |
| Belastung | | |
| Aceton | | > 100 (kein Angriff) |

### Beispiel 4: (lösemittelfreie Fahrweise gem. Beispiel 1)

- Basis: Dicyclohexylmethandiisocyanat (Hylene W)-Polyether/Polyol
- Tensid: Wäßrige Lösung von aminocapronsaurem Natrium

In Analogie zu Beispiel 1 werden ausgehend von 1 310 g Dicyclohexylmethandiisocyanat (5 Mol), 0,15 g DBTL, 1,5 g Ionol CP, 23,9 g Tinuvin 292, 9,0 g Tinuvin 900, 6,0 g Irganox 1010, 235,7 g 2-Hydroxyethylacrylat (2 Mol), 1 312,3 g Polytetrahydrofuranetherdiol (2,0 Mol, MG ca. 650), 134 g Trimethylolpropan (1 Mol) und 0,76 g DBTL zur Umsetzung gebracht. In das NCO-gerechte Präpolymer von 1,38 Massen-% NCO werden 612 g wäßrige aminocapronsaure Natriumlösung (25 Massen-%) eingetragen, ferner 1 665,2 g 60 - 70 °C heißes, entioniertes Wasser, anschließend 1 327,6 g kaltes entionisiertes H₂O (25 °C) unter Ausbildung einer Dispersion von ca. 48 Massen-% Feststoff.
Die Herstellungszeit beträgt ca. 3 Stunden. Die Viskosität der Dispersion: DIN-Becher Nr. 4: 14 Sekunden.

Stahlblech- und Foliendaten nach Härtung der Dispersion mit 200 Watt/inch in 5 Sekunden unter Zusatz von 2 Gew.-% Darocur 1116 Handelsprodukt der Fa. E. Merck, Darmstadt.

| | | |
|---|---|---|
| Pendelhärte nach König gemäß DIN 53 157 | (sec) | 63 |
| Erichsentiefung | (mm) | > 10,0 |
| Schichtdicke | (µm) | 160 |
| Reißfestigkeit gemäß DIN 53 455 | N/mm | 15,5 ± 2,5 |
| Reißdehnung | (%) | 50 ± 17 |
| Lösemittelresistenz | (rubs) | |
| Reibtest mit 1 kg/cm | | |
| Belastung | | |
| Aceton | | ca. 100 |

### Beispiel 5: (lösemittelfreie Fahrweise gem. Beispiel 1)

- Basis: Bis-Isocyanatomethylcyclohexan (HXDI)-Polyether/Polyole
- Tensid: Wäßrige Lösung von aminocapronsaurem Natrium

In Analogie zu Beispiel 1 werden ausgehend von 970 g Bis-Isocyanatomethylcyclohexan (HXDI), 0,12 g DBTL, 1,3 g Ionol CP, 21,2 g Tinuvin 292, 7,9 g Tinuvin 900, 5,3 g Irganox 1010, 235,7 g 2-Hydroxyethylacrylat (2 Mol), 1 312,3 g Polytetrahydrofuranetherdiol (2,0 Mol, MG ca. 650), 134 g Trimethylolpropan (1 Mol) und 0,69 g DBTL zur Umsetzung gebracht. In das NCO-gerechte Präpolymer von 1,56 Massen-% NCO werden 612 g wäßrige aminocapronsaure Natriumlösung (25 Massen-%) eingetragen, ferner 1 435,3 g 60 - 70 °C heißes, entionisiertes Wasser, anschließend 1 184 g kaltes entionisiertes H₂O (25 °C) unter Ausbildung einer Dispersion von ca. 48 Massen-% Feststoff.
Die Herstellungszeit beträgt ca. 2,5 Stunden. Die Viskosität der Dispersion: DIN-Becher Nr. 4: 16 Sekunden.

Stahlblech- und Foliendaten nach Härtung der Dispersion mit 200 Watt/inch in 5 Sekunden unter Zusatz von 2 Gew.-% Darocur 1116 Handelsprodukt der Fa. E. Merck, Darmstadt.

| | | |
|---|---|---|
| Pendelhärte nach König gemäß DIN 53 157 | (sec) | 26 |
| Erichsentiefung | (mm) | > 10,0 |
| Schichtdicke | (µm) | 139 |
| Reißfestigkeit gemäß DIN 53 455 | N/mm | 19,9 ± 2,3 |
| Reißdehnung | (%) | 96 ± 10 |
| Lösemittelresistenz | (rubs) | |
| Reibtest mit 1 kg/cm | | |
| Belastung | | |
| Aceton | | ca. 100 |

## Patentansprüche

1. Verfahren zur Herstellung wäßriger, strahlenhärtbarer, anionischer Urethanharnstoffacrylatdispersionen,
dadurch gekennzeichnet,
daß cyclische Polyisocyanate zunächst mit Hydroxyethylacrylat bei 25 bis 50 °C im NCO/OH Äquivalentverhältnis 4 : 1 bis 5 : 1 unter Bildung von NCO-haltigen Urethanacrylaten und anschließend mit Polyolen bei 50 bis 100 °C unter Bildung von NCO-haltigen Urethanacrylaten in Abwesenheit von Lösemitteln umgesetzt werden und in die heiße Schmelze bei 80 bis 95 °C bei intensiver Durchmischung und innerhalb von Sekunden eine verdünnte wäßrige Lösung eines Alkalisalzes der Aminocapronsäure einer Konzentration von 35 bis 20 Massen-% eingespeist und mit weiterem Wasser emulgiert wird.

2. Verfahren nach Anspruch 1,
dadurch gekennzeichnet,
daß das cyclische Polyisocyanat Isophorondiisocyanat ist.

3. Verfahren nach Anspruch 1,
dadurch gekennzeichnet,
daß Polyolmischungen von Trimethylolpropan und hydroxylhaltige Polymerisate des Tetrahydrofurans eingesetzt werden.

4. Verfahren nach Anspruch 1,
dadurch gekennzeichnet,
daß NCO/NH₂-Äquivalente im Verhältnis von 8 : 1 bis 10 : 1 für die Harnstoffbildung und die gleichzeitige Überführung in NCO-freie ionogene Präpolymere eingesetzt werden.

## Claims

1. Process for preparing aqueous, radiation-curable, anionic urethane-urea-acrylate dispersions, characterized in that cyclic polyisocyanates are first reacted with hydroxyethyl acrylate at 25 to 50°C in an NCO/OH equivalent ratio of 4:1 to 5:1 to form NCO-containing urethane acrylates and then with polyols at 50 to 100°C to form NCO-containing urethane acrylates in the absence of solvents and a dilute aqueous solution of an alkali-metal salt of aminocaproic acid having a concentration of 35 to 20% by mass is fed into the hot melt at 80 to 95°C with vigorous mixing and within seconds, and is emulsified with further water.

2. Process according to Claim 1, characterized in that the cyclic polyisocyanate is isophorone diisocyanate.

3. Process according to Claim 1, characterized in that polyol mixtures of trimethylolpropane and hydroxyl-containing polymers of tetrahydrofuran are used.

4. Process according to Claim 1, characterized in that NCO/NH₂ equivalents are used in a ratio of 8:1 to 10:1 for the formation of urea and the simultaneous conversion to NCO-free ionogenic prepolymers.

## Revendications

1. Procédé de production de dispersion d'uréthanne-urée-acrylates anioniques, durcissables aux rayonnements, aqueuses, caractérisé en ce que des polyisocyanates cycliques sont mis à réagir en premier lieu avec l'acrylate d'hydroxyéthyle de 25 à 50°C, dans un rapport en équivalent NCO/OH allant de 4:1 à 5:1, avec formation d'uréthanne-acrylates contenant des groupes NCO, et ensuite avec des polyols de 50 à 100°C, avec formation d'uréthanne-acrylates contenant des groupes NCO, en l'absence de solvant et en ce que l'on introduit dans le produit de fusion chaude de 80 à 95°C par mélange intensif en l'espace de quelques secondes, une solution aqueuse diluée d'un sel de métal alcalin d'acide aminocaproïque, à une concentration allant de 35 à 20 % en masse et on émulsionne avec davantage d'eau.

2. Procédé selon la revendication 1, caractérisé en ce que le polyisocyanate cyclique est l'isophorane diisocyanate.

3. Procédé selon la revendication 1, caractérisé en ce que l'on met en oeuvre des mélanges de polyols de triméthylol propane et de produits de polymérisation du tétrahydrofuranne contenant des groupes hydroxyle.

4. Procédé selon la revendication 1, caractérisé en ce que les équivalents NCO/NH₂ sont mis en oeuvre dans le rapport allant de 8:1 à 10:1 pour la formation d'urées et la transformation simultanée en pré-polymères dépourvus de groupes -NCO.
